(19) Europäisches Patentamt
European Patent Office
Office européen des brevets

(11) Publication number : 0 611 214 A2

(12) # EUROPEAN PATENT APPLICATION

(21) Application number : 94400290.6

(22) Date of filing : 10.02.94

(51) Int. Cl.$^5$ : **C11D 7/50,** C11D 7/22, C11D 7/26, C11D 17/00

(30) Priority : 11.02.93 US 16425

(43) Date of publication of application : 17.08.94 Bulletin 94/33

(84) Designated Contracting States : DE FR GB IT

(71) Applicant : **MINNESOTA MINING AND MANUFACTURING COMPANY**
**3M Center,**
**P.O. Box 33427**
**St. Paul, Minnesota 55133-3427 (US)**

(72) Inventor : **Onwumere, Fidelis C., c/o Minnesota Mining**
**Manufac. Company,**
**2501 Hudson Road,**
**P.O. Box 33427**
**St.Paul, Minnesota 55133-3427 (US)**

(74) Representative : **Warcoin, Jacques et al**
**Cabinet Régimbeau**
**26, avenue Kléber**
**F-75116 Paris (FR)**

(54) **Acidic composition and process of using same.**

(57) Acidic compositions having pH ranging from about 2.0 to about 5.0 are described which are characterized by a water-soluble organic solvent, an acid present in sufficient amount to provide the desired pH, and water. Preferably, the compositions comprise an organic acid present in an amount to render the composition pH from 2.0-5.0, a combination of water-soluble glycol ether solvents having differing numbers of ether groups, with the balance being water. The compositions are advantageous in that they do not require surfactants, couplers or other wetting agents to remove coatings containing polymers having free amine groups.

EP 0 611 214 A2

This invention pertains to acidic compositions useful for removing floor finishes and other coatings, especially to acidic compositions containing a water-soluble glycol ether.

As noted by Bingham in U.S. Pat. No. 5,096,610, conventional floor finish removers have employed amines (such as ammonia, ethanolamines, or diethylamine) or organic solvents (such as ethylene glycol monobutyl ether) and mixtures thereof. Bingham notes that such solvent-only formulations have resulted in sluggish removal of the finish (typically an acrylic, acrylicstyrene or polyurethane polymer) and incomplete removal, so that two or more applications of the stripping solutions were often required. Bingham discloses a floor finish remover composition containing a conventional solvent, such as an amine, glycol ether, or mixture thereof, water, and an organosilicon complex formed from a silicate such as sodium meta silicate and a linear, 6-10 carbon (optimally, 8 carbon), organic compound such as caprylic acid or sodium n-octane sulfonate. It is not apparent from the reference what the pH of the composition is, however the composition appears to have a pH greater than 7.

Numerous acidic cleaning compositions have been patented, for example, in U.S. Pat. Nos. 3,431,209; 3,253,941; and 4,587,030. However, the compositions disclosed in these references either require a surfactant and/or coupler to perform their intended function, or do not have a pH within the range of the present invention (i.e., from about 2.0 to about 5.0).

It would thus be advantageous and an advance in the floor finish remover art if compositions having a pH ranging from about 2.0 to about 5.0 could be developed which are effective without the inclusion of surfactants, couplers, and other wetting agents.

Other references disclosing the use of water-soluble glycol ether organic solvents such as used in this invention include U.S. Pat. Nos. 4,077,896 and 4,348,292 (propylene glycol-mono-tert-butyl ether). Arco Chemical Co. trade literature for the glycol ether known under the trade designation "ARCOSOLV PTB", published 1985, discloses that the addition of another organic co-solvent, such as lower alcohols or other glycol ethers, greatly increases the effective solubility in water of propylene glycol mono-tert-butyl ether. However, there is no suggestion or teaching of the use of a combination of glycol ethers in an acidic composition to remove floor finishes or other coatings. U.S. Pat. No. 5,061,393 discloses an acidic liquid detergent composition for cleaning hard surfaces having a pH ranging from 1 to 5.5 which includes zwitterionic detergent surfactants and polycarboxylate detergent builders. Japanese Kokai No. 58-185700, published 10-29-83, discloses glycol ethers useful in cleaning compositions.

In accordance with the present invention, acidic compositions are presented which do not require the addition of surfactants, couplers, or other wetting wetting agents to be effective in removing coatings containing polymers having free amine functionality such as polyurethane-based floor finishes.

In a first aspect of the invention, an acidic composition is characterized by a water/organic solvent system including

a) an effective amount of a first water-soluble organic solvent selected from the group consisting of water-soluble glycol ethers (such as ethylene glycol mono-n-butyl ether, also known as 2-butoxyethanol, and commercially known as butyl "Cellosolve") and water-soluble alkylene carbonates, such as propylene carbonate;

b) an acid present in sufficient amount to render the composition pH from about 2.0 to about 5.0; and

c) water.

As explained further herein, some compositions of the invention containing a first water-soluble glycol ether and an acid, while effective in removing free amine-containing coatings, may not be phase-stable. Thus, compositions within the invention wherein the first water-soluble organic solvent is a glycol ether preferably comprise a second water-soluble glycol ether which has at least one more ether group than the first water-soluble glycol ether, such as diethylene glycol mono-n-butyl ether (known under the trade designation butyl "Carbitol"). In the latter embodiments, it is preferred that the second water-soluble glycol ether be present in an amount sufficient to render the composition phase-stable. Preferably, the weight ratio of first water-soluble glycol ether to second water-soluble glycol ether ranges from about 1:1 to about 2:1, more preferably from about 1:1 to about 1.4:1.

As used herein, the term "water-soluble" means that organic solvents useful in the invention have a water-solubility of no less than about 1.0 weight percent at 20°C. "Phase-stable" means that the compositions of the invention are single phase compositions at temperatures typically encountered during use and storage of the compositions. Typical use temperatures are ambient temperatures ranging from about 0°C to about 45°C, while storage temperatures may range from about 0°C to about 65°C, depending on the locale.

Acidic compositions which include glycol ethers as the first water-soluble organic solvent will quickly remove natural and synthetic polymeric floor finishes having "free" amine groups either within the polymer backbone or pendant to the backbone of the polymer. The term "free" amine means that the amine is present in a form suitable for reaction with the acid in the acidic composition of the invention. The cleaning compositions

of this aspect of the invention will quickly remove these types of floor finish from base boards, resilient tile (such as composition vinyl), terrazzo-type floors and floors of other conventional materials without harming these surfaces.

Acidic compositions within the invention which include a water-soluble alkylene carbonate as the first-water soluble organic solvent are also effective at removing coatings containing a free amine functionality, such as floor finishes and other coatings, from surfaces such as floors, base boards, resilient tile (such as composition vinyl), terrazzo-type floors and floors of other conventional materials. However, compositions in accordance with the invention which include alkylene carbonates tend to be more aggressive toward composition vinyl, which may be softened or damaged by the carbonate-containing compositions.

Acidic compositions which include alkylene carbonates preferably include a small amount of a sparingly water soluble organic solvent to form an opaque composition, which is more easily identified on a surface. One preferred sparingly water soluble organic solvent found useful for this purpose is benzyl alcohol.

The acidic compositions of the invention may be used with abrasive mechanical devices which have typically been used in conjunction with previously used floor finish removing compositions.

Although the compositions of the invention do not require the addition of surfactants, couplers, and pH buffers to be effective at removing coatings having free amine groups, surfactants and couplers may be added to enhance wetting of the composition onto the coating being removed. The compositions of the invention may also contain sufficient compatible water-soluble film-forming resin to inhibit rapid evaporation of the organic solvents and the acid.

Acids useful in the invention may either be solid or liquid, organic or inorganic, with the proviso that if the acid is a solid at room temperature, the solid is at least "soluble" in water, or capable of being rendered so by agitation or other means. Although inorganic acids may be used, they may tend to be more corrosive to metals, such as metal furniture pieces; thus, organic acids are preferred.

Preferred organic acids are low molecular weight (i.e., less than 1,000, preferably less than 100) compounds within the general formula $RC0_2H$ wherein R may be any hydroxyalkyl or hydroxyaryl group, with the proviso that the acid is at least partially soluble in water at 20°C, preferably very soluble or infinitely soluble in water at 20°C. In the term "hydroxyalkyl" as employed herein, "alkyl" means any aliphatic or cycloaliphatic, aryl substituted aliphatic or cycloaliphatic group. Aliphatic groups may be saturated or unsaturated. An example of a hydroxyalkyl acid useful in the invention is hydroxyacetic acid (glycolic acid, $CH_2OHCOOH$). In the term "hydroxyaryl," the term "aryl" includes any aromatic group, or aliphatic or cycloaliphatic substituted aromatic group.

Acidic compositions within the invention may be used in concentrated form or diluted ("ready-to-use") form, with dilution ratios up to 10:1 considered within the invention.

Another aspect of the invention is sprayable compositions comprising the acidic compositions of the invention contained within aerosol and non-aerosol containers.

A further aspect of the invention is a process for treating and preserving materials, the process comprising applying to a surface a coating precursor composition comprising an aqueous ungelled dispersion of a free amine-containing polymer having a plasticizer dispersed therein, permitting the coating precursor composition to dry to a coating, and after a period of wear, removing the coating with an acidic remover composition within the first aspect of the invention, then reapplying the coating precursor.

A further aspect of the invention is a process for removing coatings containing free amines from a surface, the process comprising applying to a coating an acidic remover composition within the invention, and subjecting the composition-coated coating to conditions sufficient to remove the coating. Preferred methods are those wherein the conditions sufficient to remove the coating comprise abrading the coating with a nonwoven article.

A still further aspect of the invention is a system for removing coatings containing free amine functionality, the system comprising:

(a) a nonwoven article comprising an open, lofty, three-dimensional nonwoven web comprising a plurality of thermoplastic organic fibers, and a binder which adheres said fibers at points of mutual contact; and

(b) an acidic composition of the invention applied to the nonwoven article or the coating to be removed.

Compositions of the invention comprising an effective amount of a first water-soluble glycol ether organic solvent, an acid to render the composition pH ranging from about 2.0 to about 5.0, and water are first described.

The first water-soluble organic solvent, whether alkylene carbonate or glycol ether, functions as the primary facilitator for removing water-insoluble or water-dispersible soils, e.g., oils, waxes, smoke film, and the like. One preferred class of water-soluble glycol ethers are mono-n-alkyl glycol ethers. Suitable water-soluble mono-n-alkyl glycol ethers for this purpose include, ethylene glycol mono-n-butyl ether (2-butoxyethanol), known under the commercial designation butyl "Cellosolve", propylene glycol mono-n-butyl ether known under the trade designation "Propasol Solvent B", and the like, and mixtures thereof. Both of these to glycol ethers are available from Union Carbide Corporation. Alkylene glycol ethers having an alkyl radical containing less

than four carbon atoms (i.e., less than butyl radical, for example a methyl radical) will not have sufficient solvent properties for many floor finishes and thus are not acceptable as the first water-soluble glycol ether in the compositions of the invention.

The first water-soluble glycol ether organic solvent is preferably contained in the compositions of the invention at about 1 to about 20 percent by weight. At less than 1% organic solvent, its effectiveness in the composition is marginal. It is presently uneconomical to use more than about 20% organic solvent in a cleaning composition, although such compositions are effective, and may provide useful concentrates.

The second water-soluble glycol ether functions primarily to provide phase stability to compositions within the invention utilizing first water-soluble glycol ethers, and secondarily as a hydrophobic soil remover. Examples of suitable glycol ethers useful as the second water-soluble glycol ether in the compositions of the invention include diethylene glycol mono-methyl ether (known under the trade designation methyl "Carbitol"); diethylene glycol mono-ethyl ether (known under the trade designation "Carbitol"); diethylene glycol mono-n-butyl ether (known under the trade designation butyl "Carbitol"); diethylene glycol mono-n-hexyl ether (known under the trade designation hexyl "Carbitol"); methoxytriglycol, ethoxytriglycol, butoxytriglycol, 1-butoxyethoxy-2-propanol, and the like, all available from Union Carbide Corporation, Danbury, Connecticut.

In preferred compositions containing a combination of first and second water-soluble glycol ethers, the total weight percent of glycol ether also ranges from about 1% to 20% by weight, and the second water-soluble glycol ether is preferably present in an amount just necessary to avoid having to add a coupler to the composition to couple into solution the first water-soluble glycol ether.

As used herein the term "coupler" refers to the use of traditional emulsifying chemicals, such as 1-octane sulfonate, sodium dodecylbenzene sulfonate, sodium tallonate, sodium xylene sulfonate, as well as combinations of $C_6$-$C_{10}$ monoacids with monoethanol amine, and the like, to increase the effective water-solubility of the first water soluble organic solvent.

Organic acids useful in the inventive compositions preferably have as their general formula $RCO_2H$ wherein R may be any hydroxyalkyl or hydroxyaryl group sufficient to render the acid at least partially soluble in water, where the term "soluble" is used in accordance with the United States Pharmacopeia scale of solubility, reproduced in Grant & Hackh's Chemical Dictionary, 5th Ed., McGraw-Hill, 1987, p. 541. Exemplary organic acids falling within this definition and which are useful in the invention include formic acid (methanoic acid), acetic acid (ethanoic acid), propionic acid (propanoic acid), butyric acid (butanoic acid), and valeric acid (pentanoic acid). These acids may be functionalized with hydroxyl or amine groups, and anhydrides of the acids may be used. Examples of organic acids containing hydroxyl groups (i.e., hydroxycarboxylic acids) include glycolic acid (hydroxyacetic acid); 2-, 3-, and 4-hydroxybutanoic acids; lactic acid (alpha-hydroxypropanoic acid); and citric acid (2-hydroxy-1,2,3-propane-tricarboxylic acid), and the like and combinations thereof.

Derivatives of carboxylic acids other than acid anhydrides may be used, such as esters and amides of the above-mentioned organic acids, provided the derivatives are capable of rendering the composition pH from about 2.0 to about 5.0 and meet the above-noted solubility requirement.

The water-soluble acid preferably comprises from about 0.5 to about 5 weight percent (most preferably from about 1 to about 3 weight percent by weight of ready-to-use composition of the invention when glycol ethers are used as the organic solvent. At less than about 1 weight percent acid, the pH of the composition may render the effectiveness of the composition in removing free amine-containing floor finishes marginal without pronounced scrubbing, and if more than about 5 weight percent acid is used the compositions are effective in removing floor finishes having free amines, but the compositions may harm the underlying substrate and/or be uneconomical to use.

The amount of acid in compositions of the invention utilizing an alkylene carbonate as the water-soluble organic solvent typically ranges from about 0.5 to about 10 weight percent of ready-to-use composition. Glycolic acid is available commercially as a 70 weight percent solution in water.

One particularly preferred composition within the invention contains about 7 weight percent ethylene glycol mono-n-butyl ether; about 5 weight percent diethylene glycol mono-n-butyl ether, about 2 weight percent hydroxyacetic acid, and the balance water.

In compositions within the invention utilizing an alkylene carbonate as the water-soluble organic solvent, the alkylene sulfonate is preferably present at a weight percent ranging from about 5 to about 25 weight percent, more preferably from about 5 to about 15 weight percent, based on total weight of ready-to-use (i.e. diluted with water) composition. Concentrated compositions may have from about 50 to about 80 weight percent alkylene carbonate, per total weight of concentrate. Examples of suitable alkylene carbonates for use in the invention include ethylene carbonate and propylene carbonate, which are both cyclic carbonates. Acyclic carbonates, such as di(lower alkyl) carbonates may also be used, provided they have a water solubility of at least about 1.0. Examples of these latter carbonates include dimethyl carbonate and diethyl carbonate.

Sparingly water-soluble solvents useful with alkylene carbonates generally function to make the composition opaque (i.e., an emulsion), and have a water solubility ranging from about 0.2 to about 6.0 weight percent in water. Quantities of sparingly water-soluble solvents effective for this purpose are typically less than about 5.0 weight percent of ready-to-use composition weight, more preferably less than about 3.0 weight percent. Examples of useful sparingly water-soluble solvents which may be employed in the practice of the invention together with their aqueous ambient temperature solubility in weight percent (as reported in U.S. Pat. No. 5,080,822, column 4) include benzyl alcohol (4.4), 2-phenoxyethanol (2.3) (available under the trade designation "Dowanol EPh"), 1-phenoxy-2-propanol (1.1) (available under the trade designation "Dowanol PPh", dipropylene glycol mono-n-butyl ether (5.0) (available under the trade designation "Dowanol DPnB"), 8-phenylethanol (1.6), acetophenone (0.5), and the like. One particularly preferred sparingly water soluble organic solvent is benzyl alcohol.

Floor coatings will generally be hydrophobic due to the nature of the floor finish used and, in some cases, may have a thin, oily surface layer which may be caused by any of a variety of soiling conditions. Although one advantage of the compositions of the invention is that surfactants or couplers are not required for the compositions to be effective in removing free amine-containing floor finishes (since the organic solvents mentioned above are effective at removing soils), it may be advantageous to utilize a small amount of a compatible surfactant in the compositions of the invention to wet the area of coating being removed. Useful surfactants will generally be anionic or nonionic in nature. Commercially available suitable surfactants include nonionic surfactants, such as ethoxylated secondary alcohol surfactants, e.g., that sold under the trade name "Tergitol" 15-S-9, alkyl phenyl ethylene oxide condensate surfactants, e.g., that sold under the trade name "Triton" X100, anionic surfactants such as alkylbenzene sulfonates, e.g., that sold under the trade designation "Ultrawet" 100, lauryl sulfates such as that sold under the trade designation "Richanol" A, and long chain fatty acid salts, i.e., tallow or coconut oil soaps. The term "surfactant" is intended to include synthetic or natural soaps, detergents and surfactants. The surfactant, if used, is preferably contained in the compositions on the order of about 0.05 to about 1 weight %.

It may also be advantageous to use a compatible water-soluble film-forming resin to inhibit the rapid evaporation of the volatile active ingredients (organic solvent and acid) while the composition is applied to the coating being removed. This resin keeps volatile active ingredients in contact with the coating to be removed for a longer period of time, and thus may reduce the required effective amount of these materials in the composition. Suitable film-forming resins include sodium carboxymethyl cellulose and hydroxymethyl cellulose. Film-forming resins, if used, are preferably contained in the inventive composition in small quantities, e.g., between 0.05 and 0.5% by weight (preferably between 0.1 and 0.3%). Amounts of these resins in excess of 2 to 3% may cause the compositions to gel (a situation which may or may not be desirable) and may also leave an undesirable residue.

It may be further advantageous to include a compatible thickening agent to render the viscosity of the compositions of the invention such that they may be applied to a vertical surface, e.g., a base board, and not run therefrom. If such running occurs, the residence time of the composition with respect to the free amine-containing floor finish and soil should be reduced or the composition may run into areas where it is not wanted, e.g., upon a carpeted surface. It has been found in practice with other compositions outside of the invention that colloidal magnesium aluminum silicate (sold under the trade designation "Veegum" T) is a suitable thickening agent. This particular thickening agent is typically effective at a concentration of about 0.3% to about 0.6% by weight of total composition, but this concentration may vary with other thickening agents.

For a ready-to-use compositions within the invention, the compositions preferably have a non-aqueous portion of about 10% to about 35% by weight. The compositions of the invention can, of course, be made, sold, and used as concentrated solutions.

In use, the compositions of the invention may be sprayed as an aerosol or non-aerosol upon the coating to be removed, or simply poured thereon. Spraying can be accomplished by conventional mechanical spraying devices or by using an aerosol dispensing container with a sufficient amount of suitable aerosol propellant such as a low boiling chloro- or fluoro-substituted alkane (e.g., "Freon" 12), or low boiling alkanes or mixtures thereof, such as a mixture isobutane and propane.

The compositions of the invention may contain other optional but conventional additives. For example, the compositions may contain a colorant to provide a more aesthetic appearance, a fragrance to provide more acceptable smell, a preservative to prevent bacterial growth in the solution, and a suitable agent to eradicate germs, mold, mildew, and the like, from the coating being removed. Such components are well known in the art and specific amounts of each will be within the knowledge of the artisan.

Additives which render the pH of compositions of the invention above about 5.0 and below about 2.0 should be avoided to maintain the relatively mild acidity resulting from the ingredients described above. Buffering additives, such as basic salts of weak acids (e.g., sodium carbonate, disodium phosphate, and others disclosed in U.S. Pat. No. 3,253,941, column 8, lines 17-26) may be used to maintain the desired pH. It may, of course,

be desirous to remove both the outer-most coating and one or more underlying intermediate layers from a substrate in certain situations, in which case the user may prefer the more acidic compositions within the invention.

Coatings which may be removed by the acidic compositions described herein include polyurethane-based coatings comprised of polymers having free amine groups, such as those described in assignee's copending application serial no. 07/986,801, filed December 8, 1992, entitled "Polyurethanes Including Pendant Hindered Amines and Compositions Incorporating Same". Coatings described therein are produced from aqueous dispersions comprised of partially crosslinked silane-terminated polyurethanes. The partially crosslinked silane-terminated polyurethanes are the reaction product of prepolymers formed by reacting:

(i) a molar excess of organic polyisocyanate sufficient to promote substantially equal access of reactants (ii)-(iv) to isocyanate groups;

(ii) active hydrogen-containing material;

(iii) difunctional sterically hindered amine having the general formula

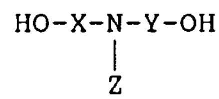

and combinations thereof; and

(iv) internal emulsifier having the general formula

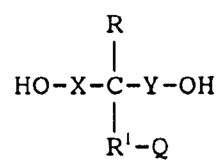

and combinations thereof, with a chain-extending monomer, which is preferably a low molecular weight active hydrogen-containing compound having at least 2 active hydrogens per molecule and which constitutes at least about 20 weight percent of the reaction product; organic compounds having a pKb of at most about 7; and silane coupling agent represented by the general formula $ASi(OR^2)_3$ and combinations thereof. The coupling agent present in an amount sufficient to partially crosslink the polyurethanes but insufficient to gel an aqueous dispersion of the reaction product.

In the above reactants,

Q is a negatively charged moiety selected from $COO^-$ and $SO_4^{2-}$;

X, Y, Z, R, and $R^1$, are independently selected from the group consisting of cyclic and aliphatic organic radicals free of reactive functional groups, and with the provisos that

(i) at least 75 %, preferably 100 % of the Z groups have at least 4 carbon atoms;

(ii) R can be hydrogen;

(iii) $R^1$ is not required if Q is $COO^-$; and

(iv) X, Y, Z, R, and $R^1$ are chosen to afford the isocyanate-terminated prepolymer an equivalent weight not exceeding about 2,000;

A is an organic radical, preferably aliphatic organic radical, having a functional group reactive with isocyanate (-NCO) groups; and

$R^2$ is independently selected from $C_1$-$C_4$ inclusive alkyl radicals.

Preferably X, Y, Z, R, and $R^1$, are independently selected from the group consisting of cyclic and aliphatic hydrocarbon moieties having from about 1 to about 20 carbon atoms, and combinations thereof. Further, it is preferred that if one or more of X, Y, Z, R, and $R^1$ is an aromatic moiety, the proportion of said aromatic moieties is less than about 20%, more preferably less than about 10% of the total number of X, Y, Z, R, and $R^1$ moieties.

Preferably, A has as its functional group reactive with -NCO groups a primary amine, secondary amine, or mercapto functional group.

Also, it is preferred that if a portion of the total weight of polyisocyanate, active hydrogen-containing material, and chain-extending monomer is aromatic, that portion does not exceed about 20%, preferably not more than 10% by weight of the prepolymer or polymer.

Those familiar with the art of polyurethanes will appreciate that the term "polyurethane compositions" typically includes prepolymers and polymers having urethane linkages, urea linkages, and random urethane-urea linkages, depending on whether the active hydrogen-containing material is polyhydroxy, polyamino, or combination thereof.

Understanding of the invention will be further facilitated by referring to the subsequent Test Methods and Examples, which indicate, without thereby limiting, ways in which the invention may be practiced and where all parts and percentages are by weight unless otherwise indicated.

**Test Method: Coating Removability**

In a variation of ASTM 1792-82, polyurethane-coated vinyl tiles were mounted onto the fixed bed of a durability tester known under the trade designation "Gardner Abrasion Tester" (Pacific Scientific, CA). This machine essentially comprised a horizontal surface to which the test tiles were attached, and a reciprocating holder for a nonwoven surface treating article. A 8.9 cm x 3.8 cm square white nonwoven pad (trade designation "Scotch-Brite Super Polish", #9030, from 3M) was attached to the reciprocating holder (narrow boat with fitted weight) so that the pad rubbed across the surface of the coated test tile. The weight of the holder and fitted weight was approximately 500 g.

In preparation for each test, one black composition vinyl tile for each two coating samples to be tested were scribed into halves with a wax pencil. For each coating to be tested, one half of the tile was coated with four coatings (2.2 milliliters per coat), with 30-45 minutes drying time between coatings. After allowing the coated tiles to dry overnight, the coated tiles were aged in an oven at 49°C for three days. After three days aging, the tiles were removed from the oven and let cool at least one hour at room temperature before proceeding with the removability test.

In each test, the weight was removed from the sample holder, and the sample holder subsequently attached to the cables of the abrasion tester. A #9030 pad (as above described) was placed into a Petri dish and enough acidic composition of the invention poured over the pad into the Petri dish to cover the pad. The pad was then allowed to soak for at least one minute. The tile having the polyurethane coating to be tested was then placed in position on the abrasion machine. Using a forceps, the pad was then removed from the acidic composition of the invention, letting the excess drain from the pad into the dish. The pad was then placed onto the sample holder, and secured therein by fasteners known under the trade designation "Instalok", from 3M. The sample holder/pad assembly was then inverted so that the pad touched the sample surface, after which the weight was placed back onto the sample holder. The abrasion machine was then run for one or two cycles so that the acidic composition-soaked pad wetted the coated tile. The wetted tiles were allowed to soak for 1 minute. The abrasion tester was then allowed to run for an additional 49 cycles or until 50 cycles had been completed.

Sample tiles were then removed from the machine, rinsed well with water, and allowed to dry. The test area of the tile was then inspected to determine if the polyurethane finish had been removed. If so, the test was complete. If the finish remained on the tile, the tile was placed back in the machine and 50 more cycles run as described above until the finish was removed or 150 cycles had been complete, whichever occurred first.

The following materials were used in the Examples which follow.

**Materials Description**

| | |
|---|---|
| DES W | means "DESMODUR W", a trade designation for methylenebis-(4-cyclohexylisocyanate), otherwise known as ($H_{12}$MDI) or dicyclohexylmethane-4,4'-diisocyanate, available from Miles Inc. (formerly Mobay Chemical Company), Pittsburgh, PA. |
| "TONE 230" | is a trade designation for a polycaprolactone diol (equivalent weight = 623 grams), commercially available from Union Carbide Corporation, Danbury, CT. |
| NBDEA | is n-butyldiethanolamine, available from BASF Corporation, Parsippany, New Jersey. |
| DMPA | is dimethylolpropanoic acid, available from Alcolac Inc., Linthicum, MD. |
| CHDM | is cyclohexanedimethanol. |
| ED | is ethylenediamine, available from BASF Corporation, Parsippany, New Jersey. |
| "A-1110" | is a trade designation for aminopropyltrimethoxysilane, available from Union Carbide Corporation, Danbury, CT. |
| NMP | is N-methylpyrrolidone, available under the trade designation "M-PYROL", from GAF Chemicals, Texas City, Texas. |
| "T-12" | is a trade designation for dibutyltin dilaurate available from Akzo Chemical Company, Chicago, IL. |
| TEA | is triethylamine, available from BASF Corporation, Parsippany, New Jersey. |
| BCAR | means butyl "Carbitol", the trade designation for diethylene glycol mono n-butyl ether, and |

| | |
|---|---|
| BCEL | means butyl "Cellosolve", the trade designation for ethylene glycol mono n-butyl ether (2-butoxyethanol), both available from Union Carbide Corporation, Danbury, CT. |

## Examples

In the following examples, "EQ" means equivalents, "EQ WT" means equivalent weight (weight in grams of one mole divided by number of reactive functional groups), "NCO" denotes the isocyanate functionality, and "OH" denotes the hydroxyl functionality. NCO equivalents were determined using the standard titration method of American Society of Testing Materials (ASTM) 309-82, which is incorporated herein by reference.

## Coating Examples

### Coating Example 1: Two-step Batch Method of Preparation of a Dispersion of a Silane-Terminated Polyurethane Including a Hindered Amine

The ingredients listed in Table 1 were charged to a 3 liter resin kettle in the following manner: first was charged DES W, after which the kettle vapor space evacuated and then flushed with nitrogen. NMP was then added with moderate agitation and the mixture heated to 60°C. After the temperature rose to 60°C, TONE 230, CHDM, NBDEA, and DMPA were added, and the temperature held at 80°C for 2 hours.

**Table 1**

| | WT. (g) | EQ WT | EQ |
|---|---|---|---|
| TONE 230 | 187.5 | 623.3 | 0.3 |
| CHDM | 21.5 | 71.7 | 0.3 |
| NBDEA | 24 | 80 | 0.3 |
| DMPA | 27 | 67.5 | 0.4 |
| DES W | 183.5 | 131 | 1.4 |
| NMP | 110 | --- | --- |

From Table 1 it can be seen that NCO EQ/OH EQ = 1.077.

Afterward and with continued stirring, 20 grams of TEA was added and the reaction continued for another 30 minutes with sufficient cooling to keep the reaction below about 80°C, after which 13.4 grams (0.074 EQ) of A-1110 was slowly added, again being careful to avoid temperature increases beyond 80°C. Immediately following the addition of the silane was the addition of 1600 grams deionized, room temperature water with stirring, which emulsified the composition. The emulsion of partially crosslinked, ungelled, silane-terminated polyurethanes was stable at room temperature, and the polymers had sterically hindered amine monomer randomly distributed in their backbones.

### Coating Example 2: Quasi-continuous Method of Preparation of a Dispersion of a silane-Terminated Polyurethane Including a Hindered Amino

Into a first 3 liter resin kettle was charged, in the order substantially as described in Example 1, the ingredients listed in Table 2 with reaction proceeding for 2 hours at 80°C with agitation and under a nitrogen blanket.

Table 2

| | WT (g) | EQ WT | EQ |
|---|---|---|---|
| TONE 230 | 487.5 | 623.3 | 0.78 |
| DES W | 582.4 | 131 | 4.45 |
| NBDEA | 83.2 | 80.5 | 1.03 |
| DMPA | 52 | 67.1 | 0.78 |
| TEA | 39 | --- | --- |
| T-12 | 0.1 | --- | --- |
| NMP | 300 | --- | --- |

Thus the NCO EQ/OH EQ = 1.72, and the EQ WT of the prepolymer formed was determined to be 832.4. As the prepolymer weighed 1544 grams, the prepolymer EQ = 1.86.

Meanwhile, in a second 3 liter resin kettle was mixed 3585 grams deionized, room temperature water, 40 grams (0.223 EQ) A-1110, and 46 grams (1.53 EQ) ED with mild agitation at 35°C.

After the reaction in the first resin kettle had proceeded for two hours, the contents of the two kettles were simultaneously fed by positive nitrogen pressure to a high-shear homogenizer known under the trade designation "Homomixer" (Gifford), forming an emulsified product stream which was recycled back to resin kettle two via a pump. The flow rates from each of the first and second resin kettles were about 2.04 kilograms/min. The excess NCO EQ of the recycle stream was 1.86 - (1.53 + 0.223) = 0.10. This procedure was continued until the contents of the first resin kettle had been consumed completely, thereby forming a partially crosslinked, ungelled, emulsified version of a polydisperse mixture of silane-terminated polyurethanes having sterically hindered amine randomly distributed along their backbones.

**Coating Example 3: Non-silane-Terminated Polyurethanes Containing Pendant Hindered Amines**

Although in most surface coatings it is preferable to utilize an emulsion of cross-linked silane-terminated polyurethanes, it is possible to utilize non-silane-terminated versions for coating applications such as wall coatings which are not subject to repeated abrasion.

Example 2 was repeated with the only change being that A-1110 silane coupling agent was not employed in the second resin kettle and 52.7 9 (1.75 EQ) of ethylenediamine (rather than 46 g (1.53 EQ)) was used. The excess NCO EQ in the recycle stream was thus 1.86 - (1.75) = 0.11. When the contents of the second resin kettle had been exhausted, the process was stopped, yielding a polydisperse emulsion of polyurethanes having sterically hindered amines randomly distributed along their backbones.

**Coating Example 4 and Comparative Examples A, B, and C**

To emphasize that the acidic compositions of the invention were effective in removing floor finishes having free amine groups, but not on coatings having no free amine groups, Example 1 was repeated four times, the only differences being the substitution of the following amines for NBDEA:

| | |
|---|---|
| Example 4 | phenyldiethanolamine |
| Comp. Ex. A | methyldiethanolamine |
| Comp. Ex. B | ethyldiethanolamine |
| Comp. Ex. C | propyldiethanolamine |

**Comparative Examples D and E**

The polyurethane dispersion of Comparative Example D was the same as that prepared in Example IA of U.S. Pat. No. 3,983,291, the only changes being that TONE 230 was substituted for TONE 0200, and no hardening polyol (known under the trade designation "Carbowax 1450", Union Carbide Corporation), and no 1,4-butanediol were used.

The polyurethane dispersion of Comparative Example E was the same as that prepared in Example 1 of U.S. Pat. No. 4,567,228, the only changes being that TONE 230 was substituted for the polyoxypropylene diol

and polyoxypropylene triol used, and NMP was substituted for MEK as solvent.

**Acidic Composition Examples 1-5 and Comparative Example F**

The acidic composition of Example 1 within the invention was prepared by combining 5 grams BCAR, 7 grams BCEL, 1.7 gram hydroxyacetic acid, and 86.3 grams deionized water. The composition had a pH of about 3.2.

The acidic composition of Example 2 within the invention was prepared by combining 14 grams propylene carbonate, 6 grams acetic acid, and 80 grams deionized water. The composition had a pH of about 3.6.

The acidic composition of Example 3 within the invention was prepared by combining 14 grams propylene carbonate, 6 grams glycolic acid (70 % acid, 30 % water), and 80 grams deionized water. The composition had a pH of about 2.8.

The acidic composition of Example 4 within the invention was prepared by combining 15 grams propylene carbonate, 2.5 grams benzyl alcohol, 7.5 grams glycolic acid (70 % acid, 30 % water), and 75 grams deionized water. The composition had a pH of about 2.5.

The acidic composition of Example 5 within the invention was prepared by combining 11 grams ethylene carbonate, 1.0 gram benzyl alcohol, 1.0 gram glycolic acid (70 % acid, 30 % water), and 83 grams deionized water. The composition had a pH of about 4.2.

For comparison, a composition having a basic pH was obtained as Comparative Example F. This composition consisted of about 6.0 grams BCEL, about 2.0 grams MEA, about 0.5 gram of the surfactant known under the trade designation "Tergitol" 15-S-9, with the balance being primarily water, with a small amout of dye and fragrance. The pH of the composition was about 9.5.

**Performance Testing (Removability)**

Polyurethane compositions made in accordance with Coating Examples 1-4 and Comparative Examples A, B, C, D and E were coated onto vinyl tiles as described in the Test Method.

Table 3 details the removability results using the test described above.

**Table 3**

Test Method

| Coating Example | Removability[1] cycles |
|---|---|
| 1 | 50 |
| 4 | 50 |
| A | <50 |
| B | <50 |
| C | <50 |
| D[2] | >>150 |
| E[3] | >>150 |

1 Measured in accordance with ASTM 1792-82, except for Example 4 and Comparative Examples A, B, and C. Example 4 coating was not easily wiped off by hand with a rag but was easily removed by the acidic compositions described in Composition Examples 1-5 with simple hand wiping with a rag soaked with the acidic composition. Comparative Example F (basic remover composition) did not remove any of the Example 4 coating, even with scrubbing with a nonwoven pad. Comparative Example coatings A, B, and C were easily wiped off of the vinyl test tiles with a deionized water-soaked rag. "<" means "less than", ">>" means "much greater than."

2 Modified version of Example 1 of U.S. Pat. No. 3,983,291.

3 Modified version of Example 1A of U.S. Pat. No. 4,567,228.

**Analysis of Test Results**

From the above Examples it is apparent that the acidic compositions of the present invention removed floor finishes containing free amines, while basic pH compositions are not effective. Floor finishes which included polyurethanes not including a sterically hindered amine having 4 or more carbon atoms (Comparative Examples A, B and C) were easily removed by water and are thus clearly not suitable for use as surface coatings where exposure to water is expected, such as floors, exterior walls, home decks, and the like. However, the acidic compositions of the present invention will also remove the coatings of Comparative Examples A, B and C. On the other hand, the polyurethanes of U.S. Pat. Nos. 3,983,291 (Comparative Example D) and 4,567,228 (Comparative Example E) were not removed at all by the acidic composition of the invention and test method employed.

While this invention has been described in connection with specific embodiments, it should be understood that it is capable of further modification. The claims herein are intended to cover those variations which one skilled in the art would recognize as the chemical equivalent of what has been described herein.

## Claims

1. An acidic composition suitable for removing coatings containing free amine functionality, the composition characterized by:
   (a) an effective amount of a first water-soluble organic solvent, said first water-soluble organic solvent selected from the group consisting of water-soluble glycol ethers and water-soluble alkylene carbonates;
   (b) an acid present in sufficient amount render the composition pH within the range of about 2.0 to about 5.0; and
   (c) water.

2. The composition of claim 1 further characterized by said first water-soluble organic solvent being a first water-soluble glycol ether.

3. The composition of claim 2 further characterized by including a second water-soluble glycol ether organic solvent which is different from said first glycol ether by having at least one more ether group, said second water-soluble glycol ether present in an amount just sufficient to render said composition phase-stable.

4. The composition of any one of claims 1 to 3 further characterized by said first water-soluble glycol ether being selected from the group consisting of ethylene glycol mono-n-butyl ether and propylene glycol mono-n-butyl ether.

5. The composition of any one of claims 2 to 4 wherein said second water-soluble glycol ether being selected from the group consisting of diethylene glycol mono-n-butyl ether, 1-butoxyethoxy-2-propanol, diethylene glycol mono-ethyl ether, diethylene glycol mono-n-butyl ether, diethylene glycol mono-n-hexyl ether, methoxytriglycol, ethoxytriglycol, butoxytriglycol, and combinations thereof.

6. The composition of any one of claims 1 to 5 further characterized by sufficient water-soluble compatible thickening agent to render the composition viscosity at least 500 cps at 25°C.

7. The composition of any one of claims 1 to 6 further characterized by sufficient compatible surfactant to enhance wetting of the composition on a coating to be removed.

8. The composition of any one of claims 1 to 7 further characterized by sufficient compatible water-soluble film-forming resin to inhibit the evaporation of the first water-soluble glycol ether organic solvent and the water-soluble acid for a time sufficient to permit substantially complete softening of a coating to be removed, wherein said film-forming resin is selected from the group consisting of sodium carboxymethyl cellulose and hydroxymethyl cellulose.

9. The composition of any one of claims 1 to 8 further characterized by said acid being selected from acids having the general formula $RC0_2H$ wherein R may be any hydroxyalkyl group or any hydroxyaryl group with the proviso that the acid is at least partially soluble in water.

10. The composition of claim 1 further characterized by said first water-soluble organic solvent being an alkylene carbonate.

11. The composition of any one of claims 1 to 10 further characterized by including a sparingly soluble organic solvent.

12. A sprayable composition contained within a non-aerosol container, said composition being suitable for removing coatings containing free amine functionality, the composition characterized by:
    (a) about 80 parts by weight water;
    (b) about 5 to 20 parts by weight ethylene glycol mono-n-butyl ether;
    (c) a sufficient amount of diethylene glycol mono-n-butyl ether to render the composition phase stable; and
    (d) a water-soluble acid in sufficient amount to render the composition pH with a range of from about 2.0 to about 5.0.

13. A sprayable composition according to claim 12, the composition characterized by :
    (a) about 80 parts by weight water;

(b) about 5 to 20 parts by weight of ethylene glycol mono-n-butyl ether;
(c) a sufficient amount of diethylene glycol mono-n-butyl ether to render the composition phase stable;
(d) a water-soluble acid present in sufficient amount to render the composition pH within a range of from about 2.0 to about 5.0; and
(e) sufficient aerosol propellant to expel said composition from an aerosol container.

**14.** A process for treating and preserving materials, the process comprising applying to a surface a coating precursor composition characerized by an aqueous ungelled dispersion of a free amine-containing polymer having a plasticizer dispersed therein, permitting said coating precursor composition to dry to a coating, and after a period of wear, removing said coating with an acidic composition according to claims 1 to 13, and then reapplying said coating precursor.

**15.** Process in accordance with claim 14 wherein said remover composition including a first water-soluble glycol ether organic solvent and a second water-soluble glycol ether organic solvent which is different from said water-soluble glycol ether by having at least one more ether group, said second water-soluble glycol ether present in an amount just sufficient to render the composition phase-stable, and wherein said acid is present in sufficient amount to render the composition pH within a range from about 2.0 to about 5.0.

**16.** Process in accordance with claims 14 or 15, further characterized by said coating precursor composition being an aqueous ungelled dispersion of a polyurethane, the polyurethane being the reaction product of : a prepolymer which is the reaction product of (i) a molar excess of organic polyisocyanate sufficient to promote substantially equal access of reactants (ii) - (iv) to isocyanate groups ; (ii) an active hydrogen-containing material ; (iii) a difunctional sterically hindered amine having the general formula

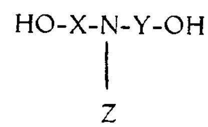

and combinations thereof ; and (iv) an internal emulsifier having the general formula

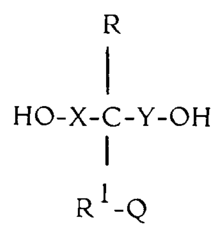

and combinations thereof ; a chain-extending monomer ; an organic compound having a pKb of at most about 7 ; and a silane coupling agent represented by the general formula ASi $(OR^2)_3$ and combinations thereof, the coupling agent present in an amount sufficient to partially crosslink the polyurethanes but insufficient to gel the aqueous dispersion wherein ;

Q is a negatively charged moiety selected from COO and $SO_4^{2-}$ ;

X, Y, Z, R, and $R^1$, are independently selected from the group consisting of cyclic and aliphatic organic radicals free of reactive functional groups, and with the provisos that

(i) at least 75 %, preferably 100 % of the Z groups have at least 4 carbon atoms ;
(ii) R can be hydrogen ;
(iii) $R^1$ is not required if Q is COO ; and
(iv) X, Y, Z, R, and $R^1$ are chosen to afford the isocyanate-terminated prepolymer an equivalent weight not exceeding about 2,000 ;

A is an organic radical having a functional group reactive with isocyanate (-NCO) groups ; and
$R^2$ is independently selected from $C_1$-$C_4$ inclusive alkyl radicals.

**17.** A process for removing coatings containing free amines from a surface, the process characterized according to any one of claims 1 to 13.

**18.** A system for removing coatings containing free amine functionality, the system characterized by :
(a) a nonwoven article which is an open, lofty, three-dimensional nonwoven web comprising a plurality of thermoplastic organic fibers, and a binder which adheres said fibers at points of mutual contact and ;
(b) an acidic composition according to claims 1 to 13 applied to the article or the coating to be removed.